# FASCICULE DE BREVET EUROPEEN

(11) **EP 3 924 223 B1**
(45) Date de publication et mention de la délivrance du brevet: **29.03.2023**
(21) Numéro de dépôt: 20707727.2
(22) Date de dépôt: 06.02.2020
(51) Int. Cl.: B60R 13/02, B60R 21/213, B60R 21/217

(54) **VÉHICULE AUTOMOBILE À MONTANTS ARRIÈRE À GARNITURE ET DISPOSITIF DE PROTECTION À SAC GONFLABLE COUPLÉS**
KRAFTFAHRZEUG MIT HINTEREN STÜTZEN UND VERBUNDENEN VERKLEIDUNGS- UND AIRBAG-SCHUTZVORRICHTUNGEN
MOTOR VEHICLE WITH REAR UPRIGHTS AND CONNECTED TRIM AND AIRBAG PROTECTION DEVICE

(30) Priorité: 13.02.2019 FR 1901444
(43) Date de publication de la demande: 22.12.2021
(73) Titulaire: PSA Automobiles SA, 78300 Poissy (FR)
(72) Inventeur: VILLA, Laurent, 91460 MARCOUSSIS (FR); RIVIERRE, Laurent, 75015 PARIS (FR)
(86) Numéro de dépôt international: PCT/FR2020/050211
(87) Numéro de publication internationale: WO 2020/165529

(56) Documents cités:
- DE-A1- 10 004 210
- FR-A1- 3 024 095
- JP-A- 2015 009 623

## Description

### Domaine technique de l'invention

L'invention concerne les véhicules automobiles qui comprennent une structure (ou caisse) délimitant un habitacle et comportant des montants (ou « pieds ») arrière à côté desquels sont installés au moins un siège.

### Etat de la technique

JP 2015 009623 A divulgue un véhicule automobile selon le préambule de la revendication 1.

Certains véhicules automobiles, du type de ceux définis ci-avant, comprennent un habitacle ayant une partie arrière dans laquelle est installé au moins un siège arrière (dit de rang deux) pouvant accueillir au moins un passager. Cet habitacle est délimité par une structure (ou caisse) comprenant dans sa partie arrière deux montants (ou pieds) arrière qui sont généralement masqués par des garnitures en matière plastique.

Afin d'améliorer la protection du passager arrière qui est assis sur un siège installé à côté d'un montant arrière, il a été proposé d'équiper ce dernier d'un dispositif de protection (ou « airbag ») comprenant un sac gonflable, initialement replié et associé à un déclencheur pyrotechnique. En cas de réception d'une commande consécutive à un choc et/ou un freinage subi par son véhicule, ce déclencheur pyrotechnique gonfle le sac afin qu'il se déploie sensiblement transversalement dans l'habitacle devant le dossier du siège pour protéger le thorax du passager.

Un tel dispositif de protection comprend un boîtier logeant au moins le sac gonflable et solidarisé fixement et directement à un montant arrière (faisant partie de la caisse). La garniture équipant (et masquant) ce dernier masque en partie le couvercle du boîtier et doit donc être couplé à ce dernier pour éviter d'être arraché, ou d'entraver le déploiement du sac, lors du gonflage très rapide de ce dernier. Pour ce faire, la garniture comprend au moins deux clips (dits à bascule) qui traversent partiellement et respectivement des ouvertures rectangulaires correspondantes, définies dans le boîtier (et plus précisément dans son couvercle).

Actuellement, chaque clip comprend une poutre en forme de U inversé et ayant deux pattes munies d'extrémités opposées solidarisées fixement à la garniture et une partie centrale suspendue entre les pattes et munie d'une protubérance d'immobilisation. La poutre est destinée à traverser partiellement l'ouverture rectangulaire correspondante du boîtier afin qu'une face d'appui de sa protubérance d'immobilisation s'appuie sur une face interne du boîtier et ainsi couple la garniture au boîtier. Cet agencement (à poutre en U) est destiné à conférer au clip une légère flexibilité par rapport à sa garniture afin de faciliter son passage au travers de l'ouverture correspondante du boîtier. C'est la raison pour laquelle il est appelé clip à bascule.

Il a été constaté que cet agencement était fragile et plus précisément que les pattes des clips pouvaient être arrachées de la garniture ou que cette dernière pouvait se casser lors du gonflage, ce qui empêchait un déploiement correct du sac.

L'invention a donc notamment pour but d'améliorer la situation.

### Présentation de l'invention

Elle propose notamment à cet effet un véhicule automobile comprenant des montants arrière à chacun desquels sont solidarisés, d'une part, un boîtier comprenant un sac gonflable, initialement replié et associé à un déclencheur pyrotechnique, et au moins deux ouvertures, et, d'autre part, une garniture comprenant au moins deux clips traversant partiellement et respectivement ces ouvertures pour coupler la garniture au boîtier.

Ce véhicule se caractérise par le fait que :
- chaque clip comprend une paroi principale solidarisée fixement à sa garniture et comportant une partie centrale munie sur une face avant d'une protubérance d'immobilisation comprenant une face d'appui et deux parties latérales encadrant cette partie centrale et sur une face avant desquelles sont solidarisées fixement, selon un angle prédéfini, des parois de renfort solidarisées fixement à la garniture, et
- chaque ouverture comprend une zone centrale ayant une forme générale rectangulaire et prolongée sur un premier grand côté par deux zones d'extrémité opposées, permettant le passage des parois de renfort et définissant entre elles une zone d'appui pour la face d'appui de la protubérance d'immobilisation sur une face externe du boîtier.

Ainsi, la surface de liaison entre chaque clip et sa garniture est notablement augmentée par rapport à celle d'un clip de l'art antérieur, ce qui permet d'éviter l'arrachement du clip et la casse de la garniture du fait d'une meilleure répartition des efforts encaissés lors d'un gonflage très rapide.

Le véhicule selon l'invention peut comporter d'autres caractéristiques qui peuvent être prises séparément ou en combinaison, et notamment :
- la zone centrale de chaque ouverture peut comprendre, sur un second grand côté opposé au premier grand côté, au moins un décrochement définissant une butée arrière pour la partie centrale du clip correspondant ;
   ➢ la zone centrale de chaque ouverture peut comprendre, sur le second grand côté et en regard respectivement des zones d'extrémité, deux décrochements définissant des butées arrière pour la partie centrale du clip correspondant ;
- la partie centrale de chaque paroi principale peut comprendre un évidement autour de sa protubérance d'immobilisation ;
- la paroi principale peut avoir une première épaisseur constante sauf sur un côté interne solidarisé fixement à sa garniture et ayant une seconde épaisseur inférieure à cette première épaisseur ;
   ➢ chaque paroi de renfort peut avoir une épaisseur égale à la seconde épaisseur ;
- chaque protubérance d'immobilisation peut avoir une face inclinée pour faciliter le passage sous la zone d'appui du boîtier ;
- chaque paroi de renfort peut avoir une face inclinée pour faciliter son passage dans la zone d'extrémité de l'ouverture correspondante ;
- l'angle prédéfini peut, par exemple, être compris entre 80° et 100° ;
- chaque sac gonflable, associé à un montant arrière, peut être destiné à se déployer devant un thorax d'un passager assis sur un siège installé à côté de ce montant arrière, lorsqu'il est gonflé par le déclencheur pyrotechnique associé.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
[Fig. 1] illustre schématiquement, dans une vue en perspective, une petite partie d'une partie arrière d'un habitacle de véhicule automobile selon l'invention, comprenant un montant arrière équipé d'une garniture et d'un dispositif de protection,
[Fig. 2] illustre schématiquement, dans une vue en perspective et en transparence, le couplage entre la garniture et le boîtier du dispositif de protection de la figure 1,
[Fig. 3] illustre schématiquement, dans une vue en perspective, un exemple de réalisation d'un clip d'une garniture devant équiper un montant arrière de véhicule automobile selon l'invention, et
[Fig. 4] illustre schématiquement, dans une vue en perspective, un exemple de réalisation d'une ouverture définie dans un boîtier de dispositif de protection et devant être traversée par le clip de la figure 3.

### Description détaillée de l'invention

L'invention a notamment pour but de proposer un véhicule automobile 1 comprenant un habitacle délimité par une structure comprenant dans sa partie arrière deux montants (ou pieds) arrière 2 masqués par des garnitures 3 couplées de façon robuste à des boîtiers 4 de dispositifs de protection (ou airbags).

Dans ce qui suit, on considère, à titre d'exemple non limitatif, que le véhicule automobile 1 est une berline. Mais l'invention n'est pas limitée à ce type de véhicule automobile. Elle concerne en effet tout type de véhicule automobile comprenant une structure délimitant un habitacle et comportant dans sa partie arrière deux montants (ou pieds) arrière à côté desquels est installé un siège (éventuellement une banquette).

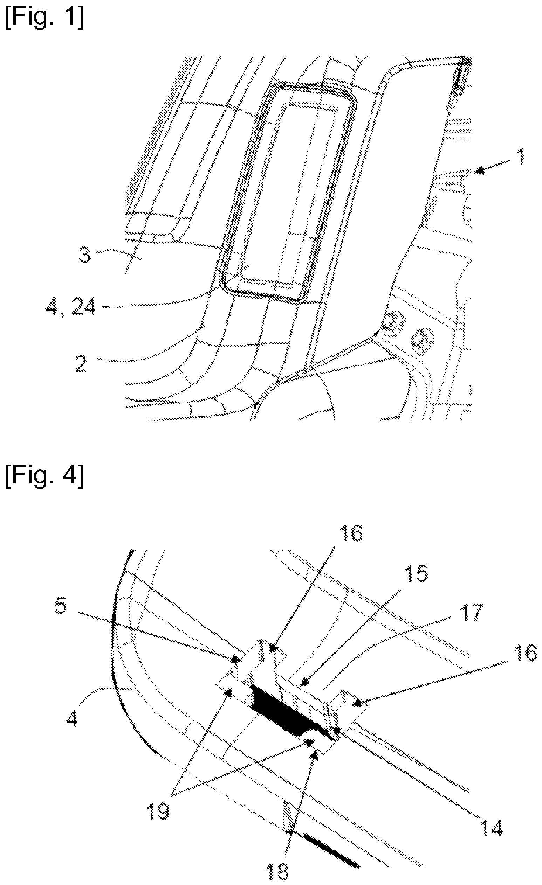

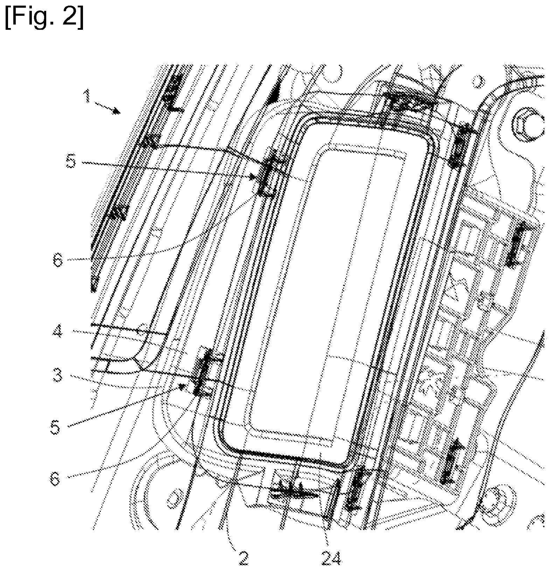

On a schématiquement représenté sur les figures 1 et 2 une petite partie d'une partie arrière d'un habitacle de véhicule automobile 1 selon l'invention, et plus précisément un montant arrière 2 équipé d'une garniture 3 couplée à un boîtier 4 d'un dispositif de protection.

Le boîtier 4 du dispositif de protection est solidarisé fixement au montant arrière 2, par exemple par vissage, clippage ou empiochage. Ce boîtier 4 loge un sac gonflable, initialement replié et associé à un déclencheur pyrotechnique qui, en cas de réception d'une commande consécutive à un choc et/ou un freinage subi par son véhicule (automobile) 1, gonfle le sac afin qu'il se déploie, par exemple, sensiblement transversalement dans l'habitacle devant le dossier du siège pour protéger le thorax du passager.

Par ailleurs, et comme illustré non limitativement sur les figures 2 et 4, ce boîtier 4 comprend une paroi munie d'au moins deux ouvertures 5 sur lesquelles on reviendra plus loin. Cette paroi constitue un couvercle et comprend une partie centrale 24 permettant la sortie du sac gonflable hors du boîtier 4.

La garniture 3 est réalisée par moulage (ou injection) d'une matière plastique rigide. Cette dernière peut, par exemple, être du polypropylène. Mais tout type de matière plastique utilisée pour l'habillage de l'intérieur d'un habitacle de véhicule peut être utilisé.

Chaque garniture 3 peut être solidarisée fixement au montant arrière 2 associé par vissage ou clippage, par exemple.

Par ailleurs, et comme illustré non limitativement sur la figure 2, chaque garniture 3 comprend au moins deux clips 6 qui sont destinés à traverser partiellement et respectivement les ouvertures 5 définies dans une paroi du boîtier 4, pour coupler la garniture 3 à ce dernier (4).

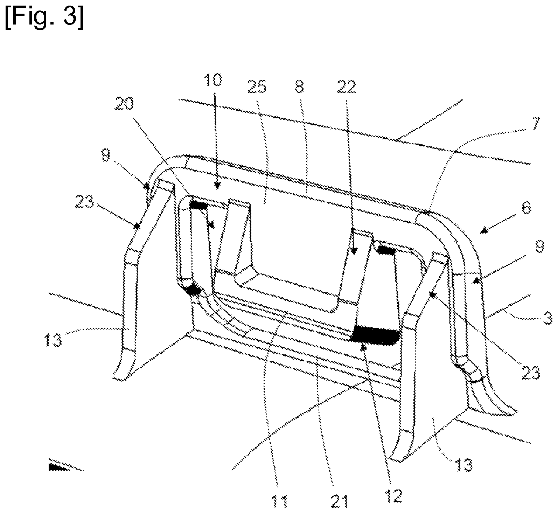

Comme illustré non limitativement sur la figure 3, chaque clip 6 comprend une paroi principale 7 solidarisée fixement à sa garniture 3 et comportant une partie centrale 8 et deux parties latérales 9 encadrant cette partie centrale 8.

La partie centrale 8 est munie sur une face avant 10 d'une protubérance d'immobilisation 11 comprenant une face d'appui 12. Les deux parties latérales 9 comprennent une face avant 10 sur laquelle sont solidarisées fixement, selon un angle prédéfini, des parois de renfort 13 qui sont elles-mêmes solidarisées fixement à la garniture 3.

Par exemple, l'angle prédéfini peut être compris entre 80° et 100°, mais il ne s'agit que d'exemples non limitatifs. Ainsi, et comme illustré non limitativement sur la figure 3, cet angle prédéfini peut être égal à 90°.

De préférence, chaque clip 6 fait partie intégrante de sa garniture 3, et donc est réalisé par moulage (ou injection) en même temps que cette dernière (3).

Comme illustré non limitativement sur la figure 4, chaque ouverture 5 comprend une zone centrale 14 vide, ayant une forme générale rectangulaire et prolongée sur un premier grand côté 15 par deux zones d'extrémité 16 opposées et vides. Ces deux zones d'extrémité 16 permettent le passage des parois de renfort 13 du clip 6 correspondant et définissent entre elles une zone d'appui 17 pour la face d'appui 12 de la protubérance d'immobilisation 11 de ce clip 6 sur une face externe du boîtier 4.

On comprendra que la paroi principale 7 d'un clip 6 passe (avec sa protubérance d'immobilisation 11) par la zone centrale 14 de l'ouverture 5 correspondante, et dans le même temps les parois de renfort 13 de ce clip 6 passe respectivement par les extrémités opposées de la zone centrale 14 et les deux zones d'extrémité 16 de cette ouverture 5, jusqu'à ce que la face d'appui 12 de la protubérance d'immobilisation 11 se retrouve au-dessus de la zone d'appui 17 de la paroi du boîtier 4 dans laquelle est définie cette ouverture 5. Puis, cette face d'appui 12 se positionne au-dessus de cette zone d'appui 17, ce qui couple son clip 6 (et donc sa garniture 3) au boîtier 4.

Grâce à l'agencement du clip 6 (paroi principale 7 avec parois de renfort 13), la surface de liaison entre ce clip 6 et sa garniture 3 est notablement augmentée par rapport à celle d'un clip de l'art antérieur, ce qui permet d'éviter l'arrachement du clip 6 et la casse de la garniture 3 du fait d'une meilleure répartition des efforts encaissés lors du gonflage très rapide.

Comme illustré non limitativement sur la figure 4, il est particulièrement avantageux que la zone centrale 14 de chaque ouverture 5 comprenne, sur un second grand côté 18 opposé au premier grand côté 15, au moins un décrochement 19 définissant une butée arrière pour la partie centrale 8 de la paroi principale 7 du clip 6 correspondant. Une telle option permet de réduire le jeu entre l'ouverture 5 et le clip 6, et donc d'éviter la génération de vibrations tout en améliorant le couplage clip/boîtier.

Par exemple, et comme illustré non limitativement sur la figure 4, la zone centrale 14 de chaque ouverture 5 peut comprendre, sur le second grand côté 18 et en regard respectivement des zones d'extrémité 16, deux décrochements 19 définissant des butées arrière pour la partie centrale 8 de la paroi principale 7 du clip 6 correspondant. Cela permet de réduire encore plus le jeu.

On notera également, comme illustré non limitativement sur la figure 3, que chaque partie centrale 8 de la paroi principale 7 d'un clip 6 peut comprendre un évidement 20 autour de la protubérance d'immobilisation 11. Cette option permet de conférer au clip 6 de la flexibilité par rapport à sa garniture 3 afin de faciliter son passage au travers de l'ouverture 5 correspondante. Dans ce cas, la protubérance d'immobilisation 11 est solidarisée fixement à un côté externe 25 de la partie centrale 8 de la paroi principale 7 d'un clip 6.

On notera également, comme illustré non limitativement sur la figure 3, que la paroi principale 7 d'un clip 6 peut avoir une première épaisseur constante sauf sur un côté interne 21 qui est opposé au côté externe 25 et solidarisé fixement à sa garniture 3 et qui a une seconde épaisseur inférieure à cette première épaisseur. Cette option permet de définir un « piège à retassure » nécessaire pour ne pas avoir de marquage sur le plan de l'aspect.

Par exemple, chaque paroi de renfort 13 peut avoir une épaisseur qui est égale à la seconde épaisseur, afin de ne pas nuire à l'aspect.

On notera également, comme illustré non limitativement sur la figure 3, que chaque protubérance d'immobilisation 11 peut avoir une face inclinée 22 afin de faciliter son passage sous la zone d'appui 17 définie dans la paroi du boîtier 3. Cela permet en effet de faciliter le glissement de la protubérance d'immobilisation 11 contre le bord de cette zone d'appui 17 lors de sa remontée dans la phase de couplage.

On notera également, comme illustré non limitativement sur la figure 3, que chaque paroi de renfort 13 peut avoir une face inclinée 23 afin de faciliter son passage dans la zone d'extrémité 16 de l'ouverture 5 correspondante. Cela permet en effet de faciliter le glissement de chaque paroi de renfort 13 contre le bord de la paroi du boîtier 4 qui délimite la zone d'extrémité 16 correspondante.

## Revendications

1. Véhicule automobile (1) comprenant des montants arrière (2) à chacun desquels sont solidarisés un boîtier (4), comprenant un sac gonflable, initialement replié et associé à un déclencheur pyrotechnique, et au moins deux ouvertures (5), et une garniture (3) comprenant au moins deux clips (6) traversant partiellement et respectivement lesdites ouvertures (5) pour coupler ladite garniture (3) audit boîtier (4), **caractérisé en ce que** chaque clip (6) comprend une paroi principale (7) solidarisée fixement à sa garniture (3) et comportant une partie centrale (8) munie sur une face avant (10) d'une protubérance d'immobilisation (11) comprenant une face d'appui (12) et deux parties latérales (9) encadrant ladite partie centrale (8) et sur une face avant (10) desquelles sont solidarisées fixement, selon un angle prédéfini, des parois de renfort (13) solidarisées fixement à ladite garniture (3), et **en ce que** chaque ouverture (5) comprend une zone centrale (14) ayant une forme générale rectangulaire et prolongée sur un premier grand côté par deux zones d'extrémité (16) opposées, permettant le passage desdites parois de renfort (13) et définissant entre elles une zone d'appui (17) pour ladite face d'appui (12) sur une face externe dudit boîtier (4).

2. Véhicule selon la revendication 1, **caractérisé en ce que** ladite zone centrale (14) de chaque ouverture (5) comprend, sur un second grand côté opposé audit premier grand côté, au moins un décrochement (19) définissant une butée arrière pour ladite partie centrale (8).

3. Véhicule selon la revendication 2, **caractérisé en ce que** ladite zone centrale (14) de chaque ouverture (5) comprend, sur ledit second grand côté et en regard respectivement desdites zones d'extrémité (16), deux décrochements (19) définissant des butées arrière pour ladite partie centrale (8).

4. Véhicule selon l'une des revendications 1 à 3, **caractérisé en ce que** chaque partie centrale (8) comprend un évidement (20) autour de ladite protubérance d'immobilisation (11).

5. Véhicule selon l'une des revendications 1 à 4, **caractérisé en ce que** ladite paroi principale (7) a une première épaisseur constante sauf sur un côté interne (21) solidarisé fixement à sa garniture (3) et ayant une seconde épaisseur inférieure à ladite première épaisseur.

6. Véhicule selon la revendication 5, **caractérisé en ce que** chaque paroi de renfort (13) a une épaisseur égale à ladite seconde épaisseur.

7. Véhicule selon l'une des revendications 1 à 6, **caractérisé en ce que** chaque protubérance d'immobilisation (11) a une face inclinée pour faciliter le passage sous ladite zone d'appui (17) du boîtier (3).

8. Véhicule selon l'une des revendications 1 à 7, **caractérisé en ce que** chaque paroi de renfort (13) a une face inclinée pour faciliter son passage dans la zone d'extrémité (16) de l'ouverture (5) correspondante.

9. Véhicule selon l'une des revendications 1 à 8, **caractérisé en ce que** ledit angle prédéfini est compris entre 80° et 100°.

10. Véhicule selon l'une des revendications 1 à 9, **caractérisé en ce que** chaque sac associé à un montant arrière (2) est destiné à se déployer devant un thorax d'un passager assis sur un siège installé à côté de ce montant arrière (2), lorsqu'il est gonflé par le déclencheur pyrotechnique associé.

## Patentansprüche

1. Kraftfahrzeug (1) mit hinteren Pfosten (2), an denen jeweils ein Gehäuse (4) befestigt ist, das einen Airbag, der anfänglich gefaltet und mit einem pyrotechnischen Auslöser verbunden ist, und mindestens zwei Öffnungen (5) umfasst, und mit einer Dichtung (3), die mindestens zwei Clips (6) umfasst, die teilweise und jeweils die Öffnungen (5) durchqueren, um die Dichtung (3) mit dem Gehäuse (4) zu verbinden, **dadurch gekennzeichnet, dass** jeder Clip (6) eine Hauptwand (7) umfasst, die fest mit seiner Dichtung (3) verbunden ist und einen zentralen Abschnitt (8) umfasst, der auf einer Vorderseite (10) mit einem Vorsprung d versehen ist Feststellvorrichtung (11) mit einer Auflagefläche (12) und zwei Seitenteilen (9), die den zentralen Teil (8) umgeben und auf einer Vorderseite (10) von denen Verstärkungswände (13), die mit der Dichtung (3) fest verbunden sind, in einem vorbestimmten Winkel fest verbunden sind, und dadurch, dass jede Öffnung (5) einen zentralen Bereich (14) mit einer im Allgemeinen rechteckigen Form umfasst, der auf einer ersten großen Seite durch zwei gegenüberliegende Endbereiche (16) verlängert ist, die den Durchgang der Verstärkungswände (13) ermöglichen und zwischen ihnen einen Auflagebereich (17) definieren) für die Auflagefläche (12) an einer Außenseite des Gehäuses (4) vorgesehen ist.

2. Fahrzeug nach Anspruch 1, **dadurch gekennzeichnet, dass** der zentrale Bereich (14) jeder Öffnung (5) auf einer zweiten großen Seite, die der ersten großen Seite gegenüberliegt, mindestens einen Absatz (19) aufweist, der einen hinteren Anschlag für den zentralen Bereich (8) definiert.

3. Fahrzeug nach Anspruch 2, **dadurch gekennzeichnet, dass** der zentrale Bereich (14) jeder Öffnung (5) auf der zweiten großen Seite und jeweils gegenüber den Endbereichen (16) zwei Ausnehmungen (19) aufweist, die hintere Anschläge für den zentralen Bereich (8) definieren.

4. Fahrzeug nach einem der Ansprüche 1 bis 3, **dadurch gekennzeichnet, dass** jeder Mittelteil (8) eine Ausnehmung (20) um den Feststellvorsprung (11) herum aufweist.

5. Fahrzeug nach einem der Ansprüche 1 bis 4, **dadurch gekennzeichnet, dass** die Hauptwand (7) eine erste konstante Dicke aufweist, ausgenommen auf einer Innenseite (21), die fest mit ihrer Auskleidung (3) verbunden ist und eine zweite Dicke aufweist, die kleiner als die erste Dicke ist.

6. Fahrzeug nach Anspruch 5, **dadurch gekennzeichnet, dass** jede Verstärkungswand (13) eine Dicke aufweist, die gleich der zweiten Dicke ist.

7. Fahrzeug nach einem der Ansprüche 1 bis 6, **dadurch gekennzeichnet, dass** jeder Feststellvorsprung (11) eine geneigte Fläche aufweist, um den Durchgang unter der genannten Auflagezone (17) des Gehäuses (3) zu erleichtern.

8. Fahrzeug nach einem der Ansprüche 1 bis 7, **dadurch gekennzeichnet, dass** jede Verstärkungswand (13) eine geneigte Fläche aufweist, um ihren Durchgang in den Endbereich (16) der entsprechenden Öffnung (5) zu erleichtern.

9. Fahrzeug nach einem der Ansprüche 1 bis 8, **dadurch gekennzeichnet, dass** der vorgegebene Winkel zwischen 80° und 100° liegt.

10. Fahrzeug nach einem der Ansprüche 1 bis 9, **dadurch gekennzeichnet, dass** jeder Sack, der einem hinteren Pfosten (2) zugeordnet ist, dazu bestimmt ist, sich vor einem Brustkorb eines Fahrgastes zu entfalten, der auf einem neben diesem hinteren Pfosten (2) angeordneten Sitz sitzt, wenn er durch den zugeordneten pyrotechnischen Auslöser aufgeblasen wird.

## Claims

1. Motor vehicle (1) comprising rear uprights (2) to each of which are secured a casing (4), comprising an inflatable bag, initially folded and associated with a pyrotechnic trip device, and at least two openings (5), and a lining (3) comprising at least two clips (6) partially passing through and respectively through said openings (5) to couple said lining (3) to said casing (4), **characterized in that** each clip (6) comprises a main wall (7) fixedly secured to its lining (3) and comprising a central part (8) provided on a front face (10) with an immobilizing protuberance (1) 1) comprising a bearing face (12) and two lateral parts (9) flanking said central part (8) and on a front face (10) of which are fixedly attached, at a predefined angle, reinforcing walls (13) fixedly attached to said lining (3), and **in that** each opening (5) comprises a central zone (14) having a generally rectangular shape and extended on a first large side by two opposite end zones (16), allowing said reinforcing walls (13) to pass and defining between them a bearing zone (17) for said bearing face the bearing (12) on an outer face of said housing (4).

2. Vehicle according to Claim 1, **characterized in that** said central zone (14) of each opening (5) comprises, on a second large side opposite said first large side, at least one step (19) defining a rear stop for said central part (8).

3. Vehicle according to Claim 2, **characterized in that** the said central zone (14) of each opening (5) comprises, on the said second long side and facing respectively the said end zones (16), two setbacks (19) defining rear stops for the said central part (8).

4. Vehicle according to one of Claims 1 to 3, **characterized in that** each central part (8) comprises a recess (20) around the said immobilizing protuberance (11).

5. Vehicle according to one of Claims 1 to 4, **characterized in that** the said main wall (7) has a first constant thickness except on an internal side (21) fixedly secured to its lining (3) and having a second thickness less than the said first thickness.

6. Vehicle according to Claim 5, **characterized in that** each reinforcing wall (13) has a thickness equal to the said second thickness.

7. Vehicle according to one of Claims 1 to 6, **characterized in that** each immobilizing protuberance (11) has an inclined face in order to facilitate the passage under the said bearing zone (17) of the casing (3).

8. Vehicle according to one of Claims 1 to 7, **characterized in that** each reinforcing wall (13) has an inclined face to facilitate its passage into the end zone (16) of the corresponding opening (5).

9. Vehicle according to one of Claims 1 to 8, **characterized in that** the said predefined angle is between 80° and 100°.

10. Vehicle according to one of Claims 1 to 9, **characterized in that** each bag associated with a rear upright (2) is intended to be deployed in front of a thorax of a passenger sitting on a seat installed next to this rear upright (2), when it is inflated by the associated pyrotechnic trigger.
